# EUROPEAN PATENT SPECIFICATION

(11) **EP 2 337 404 B1**
(45) Date of publication and mention of the grant of the patent: **19.07.2017**
(21) Application number: 09179525.2
(22) Date of filing: 16.12.2009
(51) Int. Cl.: H04W 48/10

(54) **System and Method for Identifying a Telecommunication Cell Based on Broadcast Cell Parameters**
System und Verfahren zur Identifizierung einer Telekommunikationszelle auf Grundlage von Rundsendezellparametern
Système et procédé d'identification d'une cellule de télécommunication à partir de paramètres de cellule diffusés

(43) Date of publication of application: 22.06.2011
(73) Proprietor: BlackBerry Limited, Waterloo, ON N2K 0A7 (CA)
(72) Inventor: Islam, M., Khaledul, Kanata Ontario K2K 3K1 (CA); Wirtanen, Jeffrey, William, Kanata Ontario K2K 3K1 (CA); Ekici, Ozgur, Kanata Ontario K2K 3K1 (CA)
(74) Representative: MERH-IP Matias Erny Reichl Hoffmann Patentanwälte PartG mbB

(56) References cited:
- WO-A2-2009/049167
- US-A1- 2007 254 620
- US-A1- 2009 097 448

## Description

### TECHNICAL FIELD

The application relates to identifying a type of telecommunication cell based on characteristics of cell parameters broadcast by a network.

### BACKGROUND

Femto cells are wireless access points that operate in licensed spectrum to connect standard mobile devices to a service provider's network using a backhaul such as a residential Digital Subscriber Line (DSL) or a cable broadband connection or directly attached to an intranet/internet connection such as in an office environment. A Femto cell allows service providers to extend service coverage indoors, especially where access would otherwise be limited or unavailable. For a service provider, attractions of implementing Femto cells are improvements to both coverage and capacity.

There is no mechanism for a UMTS cell or a GSM cell, which is compliant with up to release 7 of the 3^{rd} Generation Partnership Project (3GPP) specifications, to broadcast that it is a Femto cell. Release 8 (REL8) of 3GPP defines an explicit indicator for a UMTS Femto cell which can be optionally transmitted on the broadcast channel. There is not a straightforward way for a User Equipment (UE) to distinguish a Femto cell from a Macro cell prior to REL8 of 3GPP or for a pre-REL8 mobile device. Examples of UE include, but are not limited to, easily transportable devices (mobile devices) with wireless telecommunications capabilities, such as mobile telephones, personal digital assistants, handheld computers, and similar devices.

The network operators have started deploying Femto cells that use their licensed spectrum on both 3GPP-defined radio access technologies (such as UMTS) and 3GPP2-defined radio access technologies (such as cdma2000 1x and 1xEV-DO). Such in-home base station can have a coverage area of 5000 sq ft and can serve a limited number of pre-provisioned UEs simultaneously. In some systems a UE needs to be provisioned to get service on a given Femto cell. However, some network operators may provide incentive to Femto cell base station owners to let their Femto cells provide service to other UEs when their Femto cell is not loaded.

A configuration that allows the UE to determine whether a cell is a Femto cell would be beneficial for legacy mobiles that comply with pre-REL8 3GPP or REL8 mobile devices while in a pre-REL8 network or in a REL8 network that does not broadcast an optional identifier.

Document WO 2009/049167 A2 discloses the use of synchronization signals for indicating parameters associated with a base station in a telecommunication network.

### SUMMARY

According to one aspect, there is provided a method comprising: receiving information broadcast by a network comprising characteristics pertaining to one or more telecommunication cells in the network; determining a type of cell for at least one of the one or more telecommunication cells as a function of the information broadcast by the network, wherein the information is cell configuration parameter information pertaining to the one or more telecommunication cells in the network.

In some embodiments, determining a type of cell is performed using the cell configuration parameter information instead of as a result of a broadcast by the network specifically identifying the at least one telecommunication cell as a particular type of cell.

In some embodiments, determining a type of cell comprises distinguishing a cell owned by or operated by, or both, an entity that is not a service provider or a network operator from a cell owned by or operated by, or both, a service provider or a network operator in the network.

In some embodiments, determining a type of cell comprises determining if the at least one telecommunication cell is a Femto cell.

In some embodiments, the cell configuration parameter information pertaining to one or more telecommunication cells in the network comprises at least one of: cell configuration parameter information pertaining to operation of a serving telecommunication cell; and cell configuration parameter information pertaining to operation of at least one telecommunication cell neighbouring the serving telecommunication cell.

In some embodiments, the cell configuration parameter information pertaining to one or more telecommunication cells in the network comprises at least one of uplink transmit power, downlink transmit power and cell selection/re-selection parameters.

In some embodiments, the cell configuration parameter information pertaining to one or more telecommunication cells in the network comprises at least one of: maximum allowed uplink transmit power (MaxAllowedULTxPower); primary common pilot channel transmit power (P-CPICHTxPower); minimum required quality level (QqualMin); re-selection offset for a given pair of cells (Qoffset_{s,n}); and minimum required receive level (Qrxlevmin).

In some embodiments, receiving information broadcast by the network comprises receiving information on a broadcast channel.

In some embodiments, the one or more telecommunication cells is a part of at least one of a 3GPP network, 3GPP2 network, and a WiMAX network.

In some embodiments, information broadcast by the network does not include an indication specifically identifying the at least one telecommunication cell as a particular type of cell.

In some embodiments, information broadcast by the network does include an indication specifically identifying telecommunication cell as a particular type of cell, but a mobile terminal receiving the information is not configured to use the information.

In some embodiments, determining a type of telecommunication cell further enables in deciding whether to select a particular telecommunication cell during handoff.

According to another aspect, there is provided a mobile terminal comprising: at least one wireless access radio configured to: receive information broadcast by a network comprising characteristics pertaining to one or more telecommunication cells in the network; at least one processor configured to: determine a type of cell for at least one of the one or more telecommunication cells as a function of the information broadcast by the network , wherein the information is cell configuration parameter information pertaining to the one or more telecommunication cells in the network.

In some embodiments, determining a type of cell is performed using the cell configuration parameter information instead of as a result of a broadcast by the network specifically identifying the at least one telecommunication cell as a particular type of cell.

In some embodiments, the at least one processor configured to determine a type of cell is configured to distinguish a cell owned by or operated by, or both, an entity that is not a service provider or a network operator from a cell owned or operated by, or both, a service provider or a network operator in the network.

In some embodiments, the at least one processor configured to determine a type of cell is configured to determine if the at least one telecommunication cell is a Femto cell.

In some embodiments, the cell configuration parameter information pertaining to one or more telecommunication cells in the network comprises at least one of: cell configuration parameter information pertaining to operation of a serving telecommunication cell; and cell configuration parameter information pertaining to operation of at least one telecommunication cell neighbouring the serving telecommunication cell.

In some embodiments, the cell configuration parameter information pertaining to one or more telecommunication cells in the network comprises at least one of uplink transmit power, downlink transmit power and selection/re-selection parameters.

In some embodiments, the cell configuration parameter information pertaining to one or more telecommunication cells in the network comprises at least one: of maximum allowed uplink transmit power (MaxAllowedULTxPower); primary common pilot channel transmit power (P-CPICHTxPower); minimum required quality level (QqualMin); re-selection offset for a given pair of cells (Qoffset_{s,n}); and minimum required receive level (Qrxlevmin).

In some embodiments, the mobile terminal is configured to be supported by at least one of a 3GPP network, 3GPP2 network and a WiMAX network.

In some embodiments, information broadcast by the network does not include an indication specifically identifying the at least one telecommunication cell as a particular type of cell.

In some embodiments, the Femto cell is controlled by an in-home base station.

### BRIEF DESCRIPTION OF THE DRAWINGS

Embodiments will now be described with reference to the attached drawings in which:
FIG. 1 is a schematic diagram of a telecommunication cell including a Macro cell and multiple Femto cells;
FIG. 2A is an example of, for a geographical area, a grouping of overlayed Macro cells and Femto cells;
FIG. 2B is another example of, for a geographical area, a grouping of overlayed Macro cells and Femto cells;
FIG. 3 is a flow diagram of an example of a method according to an implementation as described herein;
FIG. 4 is a block diagram of a mobile device; and
FIG. 5 is a block diagram of another mobile device.

### DETAILED DESCRIPTION

In the following detailed description of sample embodiments, reference is made to the accompanying drawings, which form a part hereof, and in which is shown by way of illustration specific sample embodiments. These embodiments are described in sufficient detail to enable those skilled in the art to practice the embodiments, and it is to be understood that other embodiments may be utilized and that logical, mechanical, electrical, and other changes may be made without departing from the scope of what is described in the application. The following detailed description is, therefore, not to be taken in a limiting sense, and the scope is defined by the appended claims.

In some embodiments, the present application proposes a method for identifying a Femto cell by using characteristics broadcast for telecommunication cells of a communication system. Two particular examples of such characteristics are downlink (DL) transmit power of the cell and the maximum allowed uplink (UL) transmit power of a mobile device in the cell. More generally, it may be considered that the characteristics are cell configuration parameter information pertaining to cells, either serving cells or neighbouring cells, in the network. Due to their small size and limited communication range, Femto cells typically require a low DL transmit power compared to a Macro cell. In addition, Femto cell base stations typically limit UL transmit power of UE. Femto cells can be identified or distinguished or both from Macro cells by evaluating characteristics that are broadcast about the cells, for example, DL transmit power and the maximum allowed UL transmit power of the cell. More generally, other characteristics which are different for different types of cells may also be used to identify or distinguish or both one type of cell from another. A particular example of this is distinguishing Femto cells from Macro cells.

The mechanism described above that has been adopted for use in REL8 for explicitly defining a Femto cell would require the use of Femto cells which are compliant with REL8 or higher and UEs capable of processing an explicit identification of the Femto cell broadcast by a Macro cell of Femto cell. The mechanism relies on explicit identification of the Femto cell being conveyed on a broadcast channel. The method described in the present application can work for any Femto cell and uses cell configuration parameter information sent by any or all Macro cells about a neighbouring Femto cell or Femto cells about themselves. Cell configuration parameter information includes information that defines how a cell is configured for operation. A list of examples of such cell configuration parameters includes, but are not limited to, DL transmit power, maximum allowed UL transmit power, and cell re-selection parameters. An explicit identification of a type of cell is not considered to be cell configuration parameter information for the purpose of this application. A cell configuration parameter is defined by a quantifiable value. An explicit identification is not a quantifiable value, but is a unique expression to distinguish one type of call from another. An explicit identifier is not used in defining how a cell is configured, but simply defines the type of cell.

Some embodiments are directed to how to distinguish a Femto cell from a Macro cell without an explicit indication from the network. This is important in Femto cell deployment scenarios in which Femto cells are not compliant with REL8 3GPP specifications or if any explicit Femto cell indication is not broadcast.

Some embodiments are directed to UEs being able to distinguish a Femto cell from a Macro cell based on one or more parameters broadcast as system information. More generally, embodiments are directed to UEs being able to distinguish between a cell under full control of the network operator and a cell that is operated by an entity that is not a service provider for the network or the network operator. In some embodiments, the UE can distinguish a Femto cell with the help of broadcast information of any type of cell in the network, including Femto, Pico, Micro or Macro cells.

In a specific example, although different 3G UMTS network operators may decide to configure Femto cells slightly differently, one common attribute of most Femto cells is a low DL transmit power requirement and an associated limitation on UL transmit power. For example, common pilot channel (C-PICH) power of a UMTS Macro cell is typically in the range of 32 dBm or 1.59 W. Assuming 15% of total cell power is allocated to C-PICH, this translates to a use of an approximately 10W power amplifier (PA) being used at the Macro cell base station. On the other hand, the PA of a UMTS Femto cell or in-home base station may be limited to emit a total of 1 mW and as a result a C-PICH power level is set to approximately 0.15 mW or -8 dBm.

A Macro cell typically allows a UE to transmit according to its power class. For example, if a Macro cell indicates that it allows transmission by the UE of up to approximately 33 dBm, then a power class 1 UE can transmit at 33 dBm and a power class 3 UE can transmit at 24 dBm. On the other hand, the maximum UL transmit power requirement in a Femto cell is likely to be much lower. For example, a Femto cell can set such a limitation to approximately 1 mW or 0 dBm.

In some UMTS networks, a maximum allowed UL transmit power parameter for a serving cell and neighbouring cells is broadcast by a base station on a broadcast channel for reception by UEs within proximity of the serving cell. In some UMTS networks, a parameter defining the C-PICH transmit power level of the serving cell is also broadcast by the base station. An UE within proximity of the serving cell that receives the information broadcast by the base station can use the values of these parameters to determine whether a cell (a serving cell or a neighbour cell) is a Femto cell or a Macro cell. Included below are particular examples of values for maximum allowed UL transmit power (MaxULTxPower) and C-PICH transmit power (C-PICHTxPower) used by two particular 3G network operators:

**Table 1: An example of Maximum Uplink Transmission Power and Common Pilot Channel Transmit Power used by some commercially deployed Macro cells and Femto Cells**

| | | | |
|---|---|---|---|
| Serving Macro cell | Max UL Tx power | 24 dBm | ∼250 mW |
| Neighbour cells (that are actually Femto cell) | Max UL Tx power | 0 dBm | 1 mW |
| Serving Macro cell | C-PICH Tx power | 30 dBm | 1W |
| Neighbour cells (that are actually Femto cell) | C-PICH Tx power | -10 dBm | 0.1 mW |

**Table 2: Another example of Maximum Uplink Transmission Power and Common Pilot Channel Transmit Power used by some commercially deployed Macro cells and Femto Cells**

| | | | |
|---|---|---|---|
| Serving Macro cell | Max UL Tx power | 24 dBm | ∼250 mW |
| Neighbour cells (that are actually Femto cell) | Max UL Tx power | -5 dBm | ∼0.31 mW |
| Serving Macro cell | C-PICH Tx power | 32 dBm | 1.6 W |
| Neighbour cells (that are actually Femto cell) | C-PICH Tx power | -10 dBm | 0.1 mW |

In some embodiments, networks can also set cell re-selection parameters to make re-selection when transitioning from a Macro cell to a Femto cell easier. Cell re-selection parameters may be generally considered to be cell configuration parameters. In some embodiments, networks can also set cell re-selection parameters (i.e. For UMTS cells this may include parameters such as: minimum required signal quality level (Qqualmin); minimum required received signal level (Qrxlevmin); and neighbouring cell offset level (Qoffset)) to make re-selection when transitioning from a Femto cell to a Macro cell harder. In some embodiments, the UE can use re-selection parameters in conjunction with UL/DL power parameters to determine whether a cell is a Macro cell or a Femto cell.

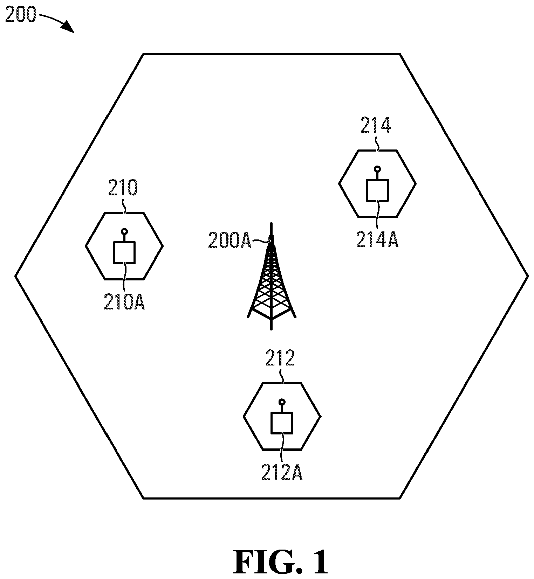

FIG. 1 shows an example of a Macro cell 200 for a given geographical area that overlaps with coverage areas of three Femto cells 210,212,214. The Macro cell 200 illustrated in FIG. 1 is an example of a single Macro cell that may be part of a network including multiple similar Macro cells, smaller or larger in size than Macro cell 200. While Macro cell 200 overlaps with coverages of three Femto cells, other Macro cells in the network may each overlap with zero Femto cells or one or more Femto cells. While only a single Macro cell is indicated in FIG. 1, there may be Macro cells of different frequencies overlayed in the given geographic area. The Macro cell 200 has its own base station 200A. Each Femto cell 210,212,214 has its own base station 210A,212A,214A. At any given time there may be any number of UEs within the Macro cell 200. Typically, the number of simultaneously active UEs in a Femto cell is limited to an implementation specific number. While not shown explicitly in FIG.1, it is possible that Femto cells may also overlap, especially if they are neighbours of each other. Furthermore, it is possible that a Femto may be deployed in a rural area where there is either no coverage from a Macro cell or only overlapping coverage with a network such as a GSM EDGE Radio Access Network (GERAN).

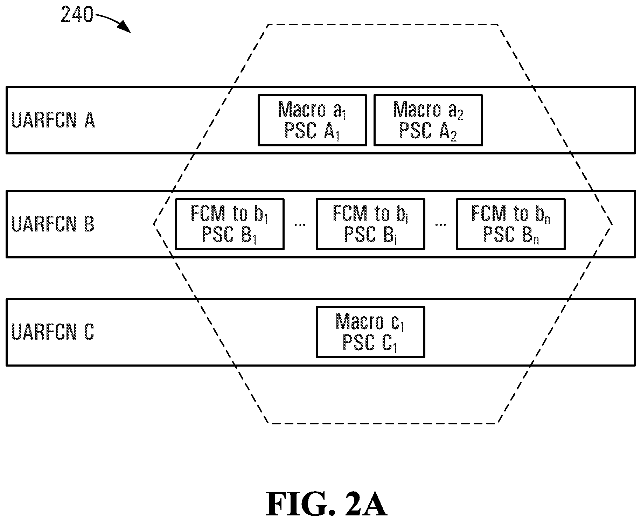

Fig. 2A shows an example of, for a geographical area supporting at least one UMTS network, a grouping of overlayed Macro cells and Femto cells for each of three distinct UTRA (UMTS Terrestrial Radio Access) Absolute Radio Frequency Channel Numbers (UARFCN). The geographical area defining the cell is indicated by dashed line 240. For a first UARFCN, indicated as UARFCN A, there are two Macro cells, a₁ and a₂, having respective primary scrambling codes (PSC) A₁ and A₂. The PSC is used for scrambling Primary Common Control Physical Channel (P-CCPCH) transmissions from the Macro cell base station. For a second UARFCN, indicated as UARFCN B, there are multiple Femto cells, b₁ to bₙ, having respective PSCs B₁ to Bₙ. For a third UARFCN, indicated as UARFCN C, there is a single Macro cell, c₁, having PSC C₁.

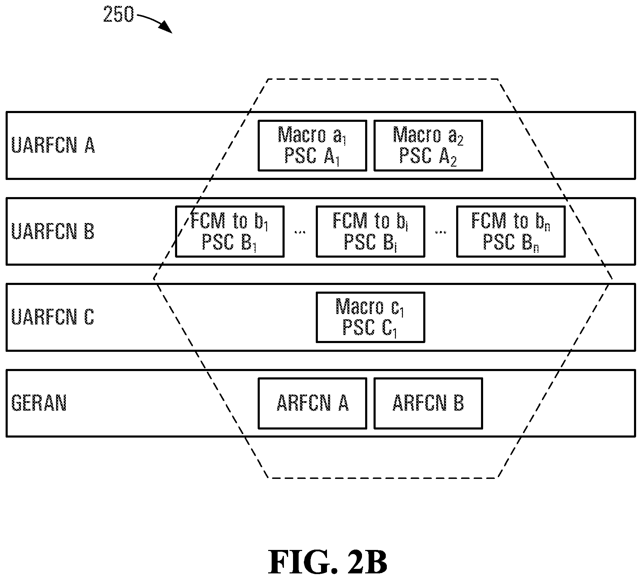

FIG. 2B shows another example of, for a geographical area supporting at least one combined GSM/UMTS network, a grouping of overlayed UMTS Macro cells and Femto cells for each of three distinct UTRA (UMTS Terrestrial Radio Access) Absolute Radio Frequency Channel Numbers (UARFCN) and a GERAN for accessing one or more GSM cells overlayed with the UMTS Macro cells and Femto cells. A multi radio access technology (RAT) UE is able to access either the GSM or UMTS networks. The geographical area defining the Macro cell is indicated by dashed line 250. For exemplary purposes, the three UARFCN used in the cell are the same as those in FIG. 2A. The particular GERAN illustrated in FIG. 2B allows access to GSM cells operating on ARFCN A and ARFCN B. While GSM and UMTS are specifically described in relation to FIG. 2B, more generally, other different types of Radio Access Technologies that have non-overlapping frequencies could be overlayed in the cell.

The base station of the serving Macro cell broadcasts information about the Macro cell and neighbour cells that are Macro cells or Femto cells or both. The information includes data for informing UEs, which are entering, or currently located in the geographical area, about serving Macro cell parameters such as, but not limited to, Downlink UTRA Absolute Radio Frequency Channel Number (DL UARFCN), primary scrambling code (PSC), location area code (LAC), cell identifier (Cellld), cell selection/re-selection parameters such as a minimum required quality level (Qqualmin) and minimum required receive level (Qrxlevmin), maximum allowed uplink transmit (MaxAllowedULTx) power and primary common pilot channel transmit (P-CPICH Tx) power.

The types of neighbouring cells that the serving Macro cell broadcasts information about may include other UMTS or GSM cells, which may include other Macro cells or Femto cells or both. Neighbouring cells that use the same frequency are "intra-frequency" cell neighbours and neighbouring cells that use different frequencies are "inter-frequency" cell neighbours. Neighbours may use the same frequency as the serving cell, i.e. the same UARFCN, but use different respective PSCs to allow the broadcast signals to be distinguished. The serving Macro cell base station broadcasts information about the neighbouring cells such as, but not limited to, the neighbouring cell DL UARFCN, PSC, MaxAllowedULTx, P-CPICH Tx, and Qoffset values. The Qoffset values may be used in biasing re-selection between a given pair of cells such as a serving cell and a neighbour cell. A non-exhaustive list of example of pairs of cells includes: two Macro cells; a Macro cell and a Femto cell, two cells of different RATs; and two Femto cells.

Referring back to FIG. 2A, Macro a1 broadcasts information regarding neighbouring cells Macro a₂, Macro c₁ and Femto cells b₁ to bₙ. Macro a₂ broadcasts information regarding neighbouring cells Macro a₁, Macro c₁ and Femto cells b₁ to bₙ. Macro c₁ broadcasts information regarding neighbouring cells Macro a₁, Macro a₂ and Femto cells b₁ to bₙ. Femto cells b₁ to bₙ each broadcast information regarding neighbouring cells Macro a₁, Macro a₂ and Macro c₁, but none of the other neighbouring Femto cells.

Referring back to FIG. 2B, Macro a1 broadcasts information regarding neighbouring cells Macro a₂, Macro c₁ and Femto cells b₁ to bₙ. Macro a1 also broadcasts information regarding the neighbouring GERAN cells. Macro a₂ broadcasts information regarding neighbouring cells Macro a₁, Macro c₁, Femto cells b₁ to bₙ and the neighbouring GERAN cells. Macro c₁ broadcasts information regarding neighbouring cells Macro a1, Macro a₂, Femto cells b₁ to bₙ and the neighbouring GERAN cells. Femto cells b₁ to bₙ each broadcast information regarding neighbouring cells Macro a₁, Macro a₂, Macro c₁, the other Femto cells, and the neighbouring GERAN cells.

Tables 3 to 6 below are examples of information that is broadcast by Macro cells and Femto cells. The tables are specific examples of lists of parameters including exemplary values. Table 3 is information that may be broadcast by a Macro cell having a particular UARFCN value and scrambling code. The Macro cell has several neighbours, other Macro cells and Femto cells, for which it is broadcasting information. In Table 3, one of the cells that happens to be a Femto cell is indicated to have UARFCN = 437 and PSC = 496. The information broadcast by this particular Femto cell about itself and neighbouring Macro cells is included in Table 4. There is a similar relationship between the Macro cell of Table 5, Femto cell of Table 6.

While Tables 3 to 6 are specific examples for the purpose of demonstrating types of information that can be broadcast by Macro and Femto cells pertaining to themselves or neighbour cells, these examples are not intended to limit the scope of possible implementations. Therefore, one skilled in the art would understand that the information being broadcast by the Macro and Femto cells about themselves and neighbouring cells does not need to include all of the parameters in the Tables below for respective Macro or Femto cells or both. As long as the Macro or Femto cells or both is broadcasting information that can allow a UE to distinguish between a Macro cell and a Femto, be that using such parameters as, but not limited to, MaxAllowedULTx, P-CPICH Tx, and Qoffset values, not all of the various parameters need be broadcast. The particular parameters broadcast by a Macro and a Femto cell are implementation specific.

In a network having many Macro cells and at least some of those Macro cells having at least one Femto cell, it is to be understood that each Macro cell would be broadcasting information, such as, but not limited to, the exemplary information illustrated in either Table 3 or Table 5, where the actual broadcast parameters, the values of those broadcast parameters and the number of neighbouring cells and their parameters and values thereof are implementation specific. Similarly, the at least one Femto cell, would broadcast information, such as, but not limited to, the exemplary information illustrated in either Table 4 or Table 6, where the actual broadcast parameters, the values of those broadcast parameters and the number of neighbouring cells and their parameters and values thereof are implementation specific.

Table 3 shown below is an example of parameter and parameter values that may be broadcast by a Macro cell base station in the geographical area the Macro cell supports. The table is comprised of multiple fields of data for informing UEs, which are entering or currently located in the geographical area, about serving Macro cell parameters such as, but not limited to, Downlink UTRA Absolute Radio Frequency Channel Number (DL UARFCN), primary scrambling code (PSC), location area code (LAC), cell identifier (Cellld), minimum required signal quality level (Qqualmin), minimum required received signal level (Qrxlevmin), maximum allowed uplink transmit (MaxAllowedULTx) power level and primary common pilot channel transmit (P-CPICH/Tx) power level. The values in each of the given fields are merely examples of values that may be included in such fields.

The first field in Table 3 defines a DL UARFCN and PSC used by the base station of the macro cell.

The next several fields in Table 3 collectively form a first SIB indicated as SIB3. SIB3 includes information defining cell selection parameters for the serving cell that include, but are not limited to, a cell identifier (Cellld), a minimum required quality level (Qqualmin), minimum required receive level (Qrxlevmin) and a maximum allowed uplink transmit power (MaxAllowedULTxPower).

The next several fields in Table 3 collectively form a second SIB indicated as SIB5. SIB5 includes information defining network access parameters for the serving cell that include, but are not limited to, primary common pilot channel transmit power (P-CPICHTxPower) and a constant value that is used set the initial power during system access.

The next several fields in Table 3 collectively form a third SIB indicated as SIB11. SIB11 includes information defining cell parameters for cells neighbouring the serving Macro cell. The table has a field indicating that there are 15 intra-frequency neighbours, which are neighbours on the same UARFCN. Information for all these neighbours is not explicitly shown in the table. Information for the inter-frequency neighbours is shown in greater detail. For a first UARFCN inter-frequency neighbour, there are six different PCS listed, indicating six neighbouring cells. These are Femto cells. Other parameters broadcast for the neighbouring Femto cells include, but are not limited to, P-CPICHTxPower, Qoffset1_{s,n}, Qoffset2_{s,n} and MaxAllowedULTxPower. For a second UARFCN inter-frequency neighbour, there are two different PCS listed, indicating two neighbouring cells. These are Macro cells. Other parameters broadcast for the neighbouring Macro cells include, but are not limited to, P-CPICHTxPower, Qoffset1_{s,n}, Qoffset2_{s,n}, Qrxlevmin and a MaxAllowedULTxPower.

From SIB 11 in Table 3 it can be seen that the P-CPICH/Tx/Power field for the neighbouring Femto cells and neighbouring Macro cells are -3dBm and 30dBm, respectively. The MaxAllowedULTxPower field for the neighbouring Femto cells and neighbouring Macro cells are 0dBm and 24dBm, respectively. Based on these values of the parameters, it is possible to determine which of the neighbour cells are Femto cells and which neighbouring cells are Macro cells.

It is to be understood that not all of the parameters illustrate in Table 3 would necessarily be included in any of, each of, or all of broadcasts made by the Macro cell. In some embodiments fewer than the illustrated example parameters may be included in the broadcast information and in some embodiments additional parameters may be included in the broadcast information. Furthermore, there may be additional System Information Blocks broadcast by the Macro cell, which are used for conveying information unrelated to what is disclosed herein and as such are not described herein.

**Table 3 - Information broadcast by Macro cell**

| |
|---|
| Macro cell (DL UARFCN = 612; PSC 256) |
| SIB3: |
| Cellld = 00119B10 |
| Qqualmin = -20dB |
| Qrxlevmin = -107dBm |
| MaxAllowedULTxPower = 24dBm |
| SIB5: |
| P-CPICHTxPower = 30dBm |
| Constant value -27 |
| SIB11: |
| 15 intra-freq neighbours (Parameter information not shown) |
| Inter-freq neighbours |
| cellSelectQualityMeasure: C-PICH E_{c}/No |
| DL-UARFCN:437 |
| PSC: 496,499,502,508,511 |
| P-CPICHTxPower: -3dBm |
| QOffset1_{s,n} : 0dB |
| Qoffset2_{s,n} : 0dB |
| MaxAllowedULTxPower = 0dBm |
| DL-UARFCN:1087 |
| PSC: 259,407 |
| P-CPICHTxPower: 30dBm |
| Qoffset1_{s,n} : 0db |
| Qoffset2_{s,n} : 0db |
| Qrxlevmin = -107dBm |
| MaxAllowedULTxPower = 24dBm |

The base station of the Femto cell broadcasts information about its own configuration and neighbour cells. Table 4 shown below is an example of parameter and parameter values that may be broadcast by a Femto cell base station in the geographical area the Femto cell supports.

The table is comprised of multiple fields of data for informing UEs, which are entering or currently located in the geographical area, about serving Femto cell parameters such as, but not limited to, DL UARFCN, PSC, LAC, Cellld, Qqualmin, Qrxlevmin, MaxAllowedULTx power and P-CPICHTxPower.

The Femto cell base station also broadcasts information about neighbouring cells. In the example of Table 4 information broadcast by the Femto base station only provides information for inter-frequency neighbours. The Femto cell base station broadcasts information for neighbouring base stations including, but not limited to neighbouring cell DL UARFCN, PSC, P-CPICHTxPower, Qqualmin and Qrxlevmin values.

Table 4 illustrates that the Femto cell does not broadcast information pertaining to other Femto cells. This is because, in the example represented by Table 4, each Femto cell is restricted to a number of authorized UEs so there is no support for Femto cell to Femto cell handover. More generally, it should be understood that a Femto cell could broadcast the presence of any neighbouring Macro or Femto cells on either the same frequency (IntraCell) or other frequencies (InterCell). It is up to network vendor's discretion how to configure it.

The first field in Table 4 defines a DL UARFCN and PSC used by the base station of the Femto cell.

The next several fields in Table 4 collectively form a first SIB indicated as SIB3. SIB3 includes information defining cell selection parameters for the serving cell that include, but are not limited to, Cellld, Qqualmin, Qrxlevmin and MaxAllowedULTxPower.

The next several fields in Table 4 collectively form a second SIB indicated as SIB5. SIB5 includes information defining network access parameters for the serving cell that include, but are not limited to, P-CPICHTxPower and a constant value.

The next several fields in Table 4 collectively form a third SIB indicated as SIB11. SIB11 includes information defining cell parameters for cells neighbouring the serving Macro cell. The table has a field indicating that only inter-frequency neighbours are included. This would not necessarily be part of the broadcast information, but is used in the table to clearly denote that only information for inter-frequency neighbours is being broadcast. Since all the Femto cells use the same UARFCN value on the basis of the Table 3 and 4 example, this means that no neighbouring Femto cell information is broadcast by the Femto cells. For a first UARFCN inter-frequency neighbour, there are three different PCS listed, indicating three neighbouring cells. These are Macro cells. Other parameters broadcast for the neighbouring Macro cells include, but are not limited to, P-CPICHTxPower, Qrxlevmin and a MaxAllowedULTxPower.

It is to be understood that not all of the parameters illustrate in Table 4 would necessarily be included in any of, each of, or all of broadcasts made by the Femto cell. In some embodiments fewer than the illustrated example parameters may be included in the broadcast information, and in other embodiments additional parameters may be included in the broadcast information. Furthermore, there may be additional System Information Blocks broadcast by the Femto cell, which are used for conveying information unrelated to what is disclosed herein and as such are not described herein.

**Table 4 - Information broadcast by Femto cell**

| |
|---|
| Femto cell (DL UARFCN = 437; PSC 496) |
| SIB3: |
| Cellld = 000000010 |
| Qqualmin = -15dB |
| Qrxlevmin = -115dBm |
| MaxAllowedULTxPower = 0dBm |
| SIB5: |
| P-CPICHTxPower = -10dBm |
| Constant value -10 |
| SIB11: |
| Only inter-freq neighbours |
| cellSelectQuality Measure: C-PICH E_{c}/No |
| DL-UARFCN:612 |
| PSC: 256,72,56 |
| P-CPICHTxPower: 30dBm |
| Qqualmin = 0dB |
| Qrxlevmin = -101dBm |

Table 5 shown below is an example of parameter and parameter values that may be broadcast by a Macro cell base station in the geographical area for a combined GSM/UMTS overlayed network that the Macro cell supports.

Table 5 is comprised of multiple fields of data for informing UEs, which are entering or currently located in the geographical area, about serving Macro cell parameters such as, but not limited to, similar information described above with respect to Table 5.

The first field in Table 5 defines a DL UARFCN and PSC used by the base station of the Macro cell.

The next several fields in Table 5 collectively form a first SIB indicated as SIB3. SIB3 includes information defining cell selection parameters for the serving cell that include, but are not limited to, Cellld, Qqualmin, Qrxlevmin and MaxAllowedULTx power.

The next several fields in Table 5 collectively form a second SIB indicated as SIB5. SIB5 includes information defining network access parameters for the serving cell that include, but are not limited to, P-CPICHTxPower and a constant value.

The next several fields in Table 5 collectively form a third SIB indicated as SIB11. SIB11 includes information defining cell parameters for cells neighbouring the serving Macro cell. The table has a field indicating that there are 32 intra-frequency neighbours, which are neighbours on the same UARFCN. Information for all these neighbours is not explicitly shown in the table. Information for the inter-frequency neighbours is shown in greater detail. For a first UARFCN inter-frequency neighbour, there is one PCS listed, indicating one neighbouring cell. This is a Macro cell. In the example of Table 5, instead of broadcasting P-CPICHTxPower or MaxAllowedTxPower or both for the neighbouring cells, parameters such as Qoffset1_{s,n}, Qoffset2_{s,n} and Qrxlevmin are broadcast. The UE can distinguish a Macro cell from a Femto cell using these parameters. For a second UARFCN inter-frequency neighbour, there are two different PCS listed, indicating two neighbouring cells. These are Femto cells. Other parameters broadcast for the neighbouring Femto cells include, but are not limited to, Qoffset1_{s,n}, Qoffset2_{s,n} and Qrxlevmin. The table has a field indicating neighbouring Inter-RAT cells. For the neighbouring inter-RAT cells, information that is broadcast includes a field for the ARFCN frequency in the Digital Cellular System (DCS) band. There are nine different ARFCN values listed, indicating nine neighbouring Inter-RAT cells. Another parameter broadcast for the neighbouring Inter-RAT cells includes a Qrxlevmin.

It is to be understood that not all of the parameters illustrate in Table 5 would necessarily be included in any of, each of, or all of broadcasts made by the Macro cell. In some embodiments fewer than the illustrated example parameters may be included in the broadcast information and in some embodiments additional parameters may be included in the broadcast information. Furthermore, there may be additional System Information Blocks broadcast by the Macro cell, which are used for conveying information unrelated to what is disclosed herein and as such are not described herein.

**Table 5 - Information broadcast by Macro cell**

| |
|---|
| Macro cell (DL UARFCN = 10738; PSC 98) |
| SIB3: |
| Cellld = 07c06360 |
| Qqualmin = -18dB |
| Qrxlevmin = -109dBm |
| MaxAllowedULTxPower = 24dBm |
| SIB5: |
| P-CPICHTxPower = 32dBm |
| Constant value -20 |
| SIB11: |
| 32 intra-freq neighbours |
| PSC(...) |
| Inter-freq neighbours |
| cellSelectQualityMeasure: C-PICH E_{c}/No |
| DL-UARFCN:10763 |
| PSC: 98 |
| DL-UARFCN:10713 |
| PSC: 51,52 |
| Qoffset1_{s,n} : -30d B |
| Qoffset2_{s,n} : -30d B |
| Qrxlevmin = -113dBm |
| Inter-rat neighbours |
| ARFCN DCS {77,80,82,75,81,66,659,79,83} |
| Qrxlevmin = -99dBm |

Table 6 shown below is an example of parameter and parameter values that may be broadcast by a Femto cell base station in the geographical area the Femto cell supports.

The table is comprised of multiple fields of data for informing UEs, which are entering or currently located in the geographical area, about serving Femto cell parameters such as, but not limited to, DL UARFCN, PSC, LAC, Cellld, Qqualmin, Qrxlevmin, MaxAllowedULTx power and P-CPICHTxPower.

The Femto cell base station also broadcasts information about neighbouring cells. The example of Table 6 provides information regarding intra-frequency neighbours, inter-frequency neighbours and inter-RAT neighbours. For example for inter-frequency neighbours, the Femto cell base station may broadcast information for neighbouring base stations including, but not limited to neighbouring cell DL UARFCN, PSC, MaxAllowedULTxPower, and Qrxlevmin values. For inter-RAT neighbours, the Femto cell base station may broadcast information for neighbouring base stations including, but not limited to, ARFCN DCS values and Qrxlevmin.

The first field of Table 6 defines a DL UARFCN and PSC used by the base station of the Femto cell.

The next several fields of Table 6 collectively form a first SIB indicated as SIB3. SIB3 includes information defining cell selection parameters for the serving cell that include, but are not limited to, Cellld, Qqualmin, Qrxlevmin and a MaxAllowedULTxPower.

The next several fields of Table 6 collectively form a second SIB indicated as SIB5. SIB5 includes information defining network access parameters for the serving cell that include, but are not limited to, P-CPICHTxPower and a constant value.

The next several fields of Table 6 collectively form a third SIB indicated as SIB11. SIB11 includes information defining cell information for neighbouring cells of the serving cell related to intra-frequency neighbours, inter-frequency neighbours and inter-RAT neighbours. The table has a field indicating that there are intra-frequency neighbours, which in the example case is another Femto cell having a PSC value of 51. For a first UARFCN inter-frequency neighbour, there are six PCS listed, indicating six neighbouring cells. These are Macro cells. Other parameters include MaxAllowedULTxPower and Qrxlevmin. The table has a field indicating neighbouring Inter-RAT cells. For the neighbouring Inter-RAT cells, information that is broadcast includes a field for the ARFCN frequency in the DCS band. There are six different ARFCN values listed, indicating six neighbouring Inter-RAT cells. Another parameter broadcast for the neighbouring Inter-RAT cells includes Qrxlevmin.

It is to be understood that not all of the parameters illustrate in Table 6 would necessarily be included in any of, each of, or all of broadcasts made by the Femto cell. In some embodiments fewer than the illustrated example parameters may be included in the broadcast information, and in other embodiments additional parameters may be included in the broadcast information. Furthermore, there may be additional System Information Blocks broadcast by the Femto cell, which are used for conveying information unrelated to what is disclosed herein and as such are not described herein.

**Table 6 - Information broadcast by Femto cell**

| |
|---|
| Femto cell (DL UARFCN = 10713; PSC 52) |
| SIB3: |
| Cellld = 36600040 |
| Qqualmin = -185dB |
| Qrxlevmin = -115dBm |
| MaxAllowedULTxPower = -5dBm |
| SIB5: |
| P-CPICHTxPower = -10dBm |
| Constant value -20 |
| SIB11: |
| cellSelectQualityMeasure: C-PICH E_{c}/No |
| Intra-freq neighbours |
| PSC=51 |
| Inter-freq neighbours |
| DL-UARFCN:10738 |
| PSC: 98,390,246,430,407,272 |
| MaxAllowedULTxPower = 24dBm |
| Qrxlevmin = -101dBm |
| Inter-rat neighbours |
| ARFCN DCS {683,76,668,659,681,83} |
| Qrxlevmin = -99dBm |

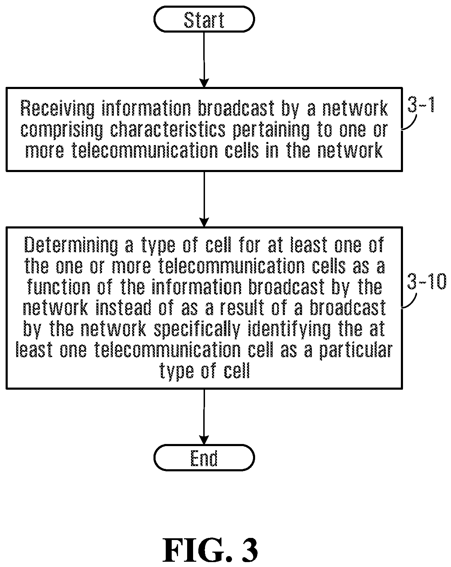

Referring to FIG. 3, a method for determining whether a telecommunication cell is a Femto cell or not will now be described. A first step 3-1 involves receiving information broadcast by a network comprising characteristics pertaining to one or more telecommunication cells in the network.

A second step 3-2 involves determining a type of cell for at least one of the one or more telecommunication cells as a function of the information broadcast by the network in which the information is cell configuration parameter information pertaining to the one or more telecommunication cells in the network. In some embodiments, determining a type of cell is performed using the cell configuration parameter information instead of as a result of a broadcast by the network specifically identifying the at least one telecommunication cell as a particular type of cell.

In some embodiments determining a type of cell comprises distinguishing a cell owned by or operated by, or both, an entity other than a service provider or network operator from a cell owned by or operated by, or both, a service provider or network operator in the network.

In some embodiments, the method is performed by a UE, such as, but not limited to, a mobile terminal, a wirelessly enabled computer or PDA. In some embodiments the UE is a mobile device that is in connection with a network via a wireless connection. The information may be broadcast by a Macro cell or a Femto cell and based on one or more parameters, such as, but not limited to, uplink transmit power, downlink transmit power, and cell selection/re-selection parameters, the UE can determine different types of cells. For example the UE can differentiate between a Femto cell and a Macro cell.

Such a method could be implemented by a UE even though the Femto cell may be transmitting a specific identification of the telecommunication cell as being a Femto cell. In UEs that are not capable of utilizing the specific identification, for example UEs that are not REL8 compliant, the method may provide a manner of identifying Femto cells. In some embodiments the method provides a REL8 UE to differentiate between a Macro cell and a Femto cell in a Pre-REL 8 network.

In some embodiments, the UE can perform steps of the method before entering a cell, such as, but not limited to, when the UE is in a first Macro cell and receiving broadcast information about an adjacent second Macro cell for a same radio access technology (RAT), an overlayed cell of a second Macro cell for a same RAT, an overlayed cell of a different RAT, an adjacent second Macro cell of a different RAT, a Femto cell within the first Macro cell and a Femto cell within a cell of a different RAT. In some embodiments the UE can perform steps of the method while it is within a cell, for example within a first Macro cell and receiving broadcast information about an adjacent Macro cell, within the cell, but utilizing a different RAT or within a Femto cell within the first Macro cell.

If the UE can determine that a given cell is indeed a Femto cell, then it can use this information for a variety of purposes. In some embodiments, determining a type of telecommunication cell enables a UE to make a more informed decision regarding which cell to choose when selecting a particular telecommunication cell during handoff. Reasons that a UE may wish to select a particular cell, or avoid a particular cell are expanded upon below.

In some implementations UEs can be loaded with lists, or generate and maintain lists of cells that they can and cannot access. Some Femto cells can be allowed to be open to anyone wishing to access them, with the owner's permission, and others are closed and only available to the owners. Open and available Femto cells can be included in a "white list" and closed Femto cells can be included in a "black list". Once the UE determines whether a cell is a Femto cell or not, the UE can use the information in populating a white list or black list or both. By identifying which cells are Femto cells and using this information for populating white and black lists, it may be possible to save system resources by not performing neighbouring cell measurements of cells that are known to be Femto cells that are not accessible to the UE.

Knowledge of whether a cell is a Femto cell or not may also be useful for cell re-selection or measurement or both, defining cell priority or preferences or both. Knowing which cells are Femto cells may increase a probability of acquiring or staying on a Femto cell or both. For example, there is no need to perform any measurements, for example signal strength measurements on a Femto cell if it is known to be not available to be accessed (i.e. if it is included on the black list). This may aid in overall efficiency by identifying Femto cells that need not be measured in the future if they are not open and available.

The latency or throughput of a Femto cell may differ from the cells of the network on which the UE had been operating before joining the Femto cell. Some control signalling parameters for the Femto cell may be configured to be longer than for other cells of the network. While this may just be a control signalling issue it may also affect data traffic latency. In some situations the data traffic alone may be slower than the control signalling data.

In addition, in some embodiments the back haul from the Femto cell base station to the network may be over an in-home ADSL/Cable modem connection or network connection that is actually slower than available bandwidth over the air or that can be provided by an overlayed Macro or Micro cell.

Many Internet Service Providers (ISPs) are performing deep packet inspection of traffic on their networks. In such a scenario it may be difficult to distinguish between "file sharing" traffic and Femto cell traffic. As a result, under particular situations, it may be advantageous to avoid a Femto cell because if traffic shaping is performed by the ISPs, Femto cell traffic may be adversely affected, particularly in terms of latency, as described above.

For some of the reasons discussed above, the Femto cell may provide reduced services when compared to overlayed Macro or Micro cells. On networks that intend to use Femto cells to improve capacity, the cells may become congested if overloaded with traffic. This may lead to issues discussed above with regard to back-haul performance. Furthermore, congestion of the cells may also lead to power control issues or interference issues between neighbouring Femto cells where a Micro/Macro cell may alternatively provide better performance for at least some parameters. For example, if a Femto cell and overlapping Macro cells are on the same frequency, there may be uplink interference on the Femto cell base station. To have an adequate signal quality, the Femto cell base station should request the UE to increase its transmission power level via power control. However, the UE can only increase its transmission power level a finite amount before the UE reaches the MaxTxPower level (i.e. 0 dBm). This may cause dropped calls or other consequences.

Knowing which cells are Femto cells and which cells are Macro cells may enable the UE, or the user of the UE, to make a selection of which cell to handoff to that would better serve the purposes of the UE. For example, it the UE has a communication of high importance that it cannot afford to have dropped or delayed, the UE may make a decision to use the Macro cell instead of the Femto cell because the Macro cell has a more reliable connection.

While examples described above may appear to pertain specifically to UMTS, the concept described here is applicable to other networks and Radio Access Technologies (RATs) as well, including for example, but not limited to, GSM/GPRS/EDGE/Evolved-EDGE, CDMA2000, TD-SCDMA, LTE and WiMAX solutions.

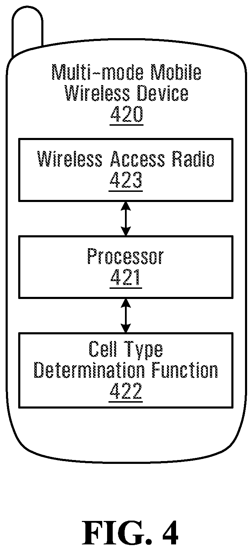

Referring now to FIG. 4, shown is a block diagram of an example wireless device 420 adapted to communicate using circuit switched and packet switched communications separately or simultaneously. The wireless device 420 has a processor 421 coupled to a wireless access radio 423. The wireless device may also have a Cell Type Determination Function 422 that is configured to operate in the manner described above. In some embodiments the wireless device 420 is a multi-mode mobile wireless device.

In operation, the wireless device 420 is adapted to communicate wirelessly over a wireless communication network, for example a cellular network (for example a network of which a portion is shown in FIG. 1), using the wireless access radio 423. The wireless device 420 is adapted to communicate using circuit switched and packet switched communications separately or simultaneously. In some embodiments, wireless access radio 423 is configured to receive information broadcast by a network comprising characteristics pertaining to one or more telecommunication cells in the network. In some embodiments, the processor 421 is configured to execute the Cell Type Determination Function 422. The Cell Type Determination Function 422 is configured to determine a type of cell for at least one of the one or more telecommunication cells as a function of the information broadcast by the network in which the information is cell configuration parameter information pertaining to the one or more telecommunication cells in the network. In some embodiments, the Cell Type Determination Function 422 may determine a type of cell as a function of the cell configuation parameter information instead of as a result of a broadcast by the network specifically identifying the at least one telecommunication cell as a particular type of cell.

The Cell Type Determination Function 422 can be implemented using one of software, hardware, and firmware, or a suitable combination thereof. For example, application specific integrated circuits (ASIC) or field programmable gate arrays (FPGA) may be used to implement the function in hardware. To implement the function in software, in some embodiments, a microprocessor may be used capable of executing computer readable program code instructions.

The device of FIG. 4 shows only functionality relevant to the aspects described herein. It is to be understood that practical implementations would include additional functionality to that shown.

### Another Wireless device

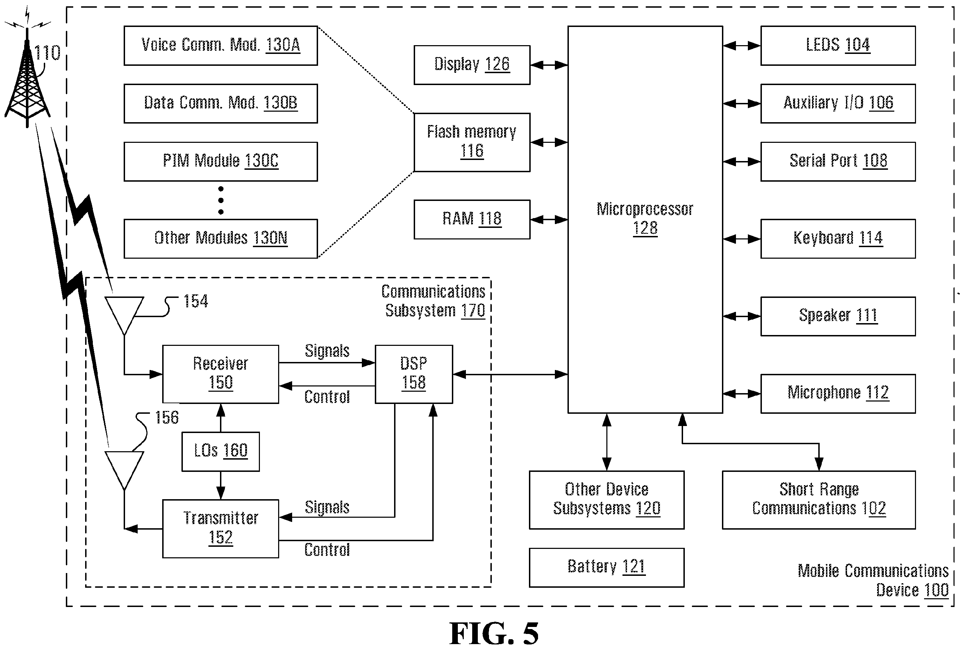

Referring now to FIG. 5, shown is a block diagram of another wireless device 100 that may implement any of the wireless device methods described herein. The wireless device 100 is shown with specific components for implementing features described above, for example those generally illustrated in FIG. 4. It is to be understood that the wireless device 100 is shown with very specific details for exemplary purposes only.

A processing device (a microprocessor 128) is shown schematically as coupled between a keyboard 114 and a display 126. The microprocessor 128 is a type of processor with features similar to those of the processor 421 of the wireless device 420 shown in FIG. 4. The microprocessor 128 controls operation of the display 126, as well as overall operation of the wireless device 100, in response to actuation of keys on the keyboard 114 by a user.

The wireless device 100 has a housing that may be elongated vertically, or may take on other sizes and shapes (including clamshell housing structures). The keyboard 114 may include a mode selection key, or other hardware or software for switching between text entry and telephony entry.

In addition to the microprocessor 128, other parts of the wireless device 100 are shown schematically. These include: a communications subsystem 170; a short-range communications subsystem 102; the keyboard 114 and the display 126, along with other input/output devices including a set of LEDs 104, a set of auxiliary I/O devices 106, a serial port 108, a speaker 111 and a microphone 112; as well as memory devices including a flash memory 116 and a Random Access Memory (RAM) 118; and various other device subsystems 120. The wireless device 100 may have a battery 121 to power the active elements of the wireless device 100. The wireless device 100 is in some embodiments a two-way radio frequency (RF) communication device having voice and data communication capabilities. In addition, the wireless device 100 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the wireless device 100 may also be stored to the RAM 118.

The microprocessor 128, in addition to its operating system functions, enables execution of software applications on the wireless device 100. A predetermined set of software applications that control basic device operations, such as a voice communications module 130A and a data communications module 130B, may be installed on the wireless device 100 during manufacture. In addition, a personal information manager (PIM) application module 130C may also be installed on the wireless device 100 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system. As well, additional software modules, illustrated as another software module 130N, may be installed during manufacture.

Communication functions, including data and voice communications, are performed through the communication subsystem 170, and possibly through the short-range communications subsystem 102. The communication subsystem 170 includes a receiver 150, a transmitter 152 and one or more antennas, illustrated as a receive antenna 154 and a transmit antenna 156. In addition, the communication subsystem 170 also includes a processing module, such as a digital signal processor (DSP) 158, and local oscillators (LOs) 160. In some embodiments, the communication subsystem 170 includes a separate antenna arrangement (similar to the antennas 154 and 156) and RF processing chip/block (similar to the Receiver 150, LOs 160 and Transmitter 152) for each RAT, although a common baseband signal processor (similar to DSP 158) may be used for baseband processing for multiple RATs. The specific design and implementation of the communication subsystem 170 is dependent upon the communication network in which the wireless device 100 is intended to operate. For example, the communication subsystem 170 of the wireless device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), etc. Examples of CDMA include 1X and 1x EV-DO. The communication subsystem 170 may also be designed to operate with an 802.11 Wi-Fi network or an 802.16 WiMAX network or both. Other types of data and voice networks, both separate and integrated, may also be utilized with the wireless device 100.

Network access may vary depending upon the type of communication system. For example, in the Mobitex™ and DataTAC™ networks, wireless devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the wireless device 100 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the wireless device 100. In addition, the display 126 may also be utilized in voice communication mode, for example, to display the identity of a calling party, the duration of a voice call, or other voice call related information.

The short-range communications subsystem 102 enables communication between the wireless device 100 and other proximate systems or devices, which need not necessarily be similar devices. For example, the short range communications subsystem may include an infrared device and associated circuits and components, or a Bluetooth™ communication module to provide for communication with similarly-enabled systems and devices.

It should be understood that as used herein, terms such as coupled, connected, electrically connected, in signal communication, and the like may include direct connections between components, indirect connections between components, or both, as would be apparent in the overall context of a particular embodiment. The term coupled is intended to include, but not be limited to, a direct electrical connection.

Numerous modifications and variations are possible in light of the above teachings. It is therefore to be understood that within the scope of the appended claims, implementations may be practised otherwise than as specifically described herein.

## Claims

1. A method performed on a mobile terminal (100, 420) that is in connection with a network via a wireless connection, the network including one or more telecommunication cells (200, 210, 212, 214), the one or more telecommunication cells comprising one or more macro cells (200) and one or more femto cells (210, 212, 214), the method being for determining if the at least one telecommunication cell is a Femto cell (210, 212, 214), the at least one telecommunication cell (200, 210, 212, 214) and/or the mobile terminal (100, 420) being Release 8 3GPP non-compliant, the method comprising:
receiving (3-1) information broadcast by the network comprising characteristics pertaining to the one or more telecommunication cells (200, 210, 212, 214) in the network;
determining (3-2) if at least one of the one or more telecommunication cells is a Femto cell (210, 212, 214) as a function of the information broadcast by the network, wherein the information is cell configuration parameter information pertaining to the one or more telecommunication cells in the network;
wherein determining if at least one of the one or more telecommunication cells is a Femto cell (210, 212, 214) is performed using the cell configuration parameter information, wherein the information broadcast by the network does not include an indentifier specifically identifying the at least one telecommunication cell as a particular type of cell;
wherein the cell configuration parameter information is quantifiable value that defines how a cell is configured for operation and comprises at least one of uplink transmit power, downlink transmit power and cell selection/re-selection parameters.

2. The method of claim 1 wherein determining (3-2) if at least one of the one or more telecommunication cells is a Femto cell (210, 212, 214) comprises distinguishing a cell owned by or operated by, or both, an entity that is not a service provider or a network operator from a cell owned by or operated by, or both, a service provider or network operator.

3. The method of any one of claims 1 to 2 wherein the cell configuration parameter information pertaining to one or more telecommunication cells in the network comprises at least one of:
cell configuration parameter information pertaining to operation of a serving telecommunication cell; and
cell configuration parameter information pertaining to operation of at least one telecommunication cell neighbouring the serving telecommunication cell.

4. The method of any one of claims 1 to 3 wherein the cell configuration parameter information pertaining to one or more telecommunication cells in the network comprises at least one of: maximum allowed uplink transmit power (MaxAllowedULTxPower); primary common pilot channel transmit power (P-CPICHTxPower); minimum required quality level (QqualMin); re-selection offset for a given pair of cells (Qoffset_{s,n}); and minimum required receive level (Qrxlevmin).

5. The method of any one of claims 1 to 4 wherein determining (3-10) if at least one of the one or more telecommunication cells is a Femto cell (210, 212, 214) further enables in deciding whether to select a particular telecommunication cell during handoff.

6. A mobile terminal (100, 420) configured for connection with a network via a wireless connection, the network including one or more telecommunication cells (200, 210, 212, 214), the one or more telecommunication cells (200, 210, 212, 214) comprising one or more macro cells (200) and one or more femto cells (210, 212, 214), at least one telecommunication cell and/or the mobile terminal (100, 420) being Release 8 3GPP non-compliant, the method comprising:
at least one wireless access radio (423) configured to:
receive information broadcast by the network comprising characteristics pertaining to one or more telecommunication cells (200, 210, 212, 214) in the network;
at least one processor (128, 421) configured to:
determine if at least one of the one or more telecommunication cells is a Femto cell (210, 212, 214) as a function of the information broadcast by the network, wherein the information is cell configuration parameter information pertaining to the one or more telecommunication cells in the network;
wherein determining if at least one of the one or more telecommunication cells is a Femto cell (210, 212, 214) is performed using the cell configuration parameter information, wherein the information broadcast by the network does not include an indentifier specifically identifying the at least one telecommunication cell as a particular type of cell;
wherein the cell configuration parameter information is a quantifiable value that defines how a cell is configured for operation and comprises at least one of uplink transmit power, downlink transmit power and cell selection/re-selection parameters.

7. The mobile terminal (100, 420) of claim 6 wherein the at least one processor (128, 421) configured to determine if at least one of the one or more telecommunication cells is a Femto cell (210, 212, 214) is configured to distinguish a cell owned by or operated by, or both, an entity that is not a service provider or a network operator from a cell owned by or operated by, or both, a service provider or a network operator.

8. The mobile device (100, 420) of any one of claims 6 to 7 wherein the cell configuration parameter information pertaining to one or more telecommunication cells in the network comprises at least one of:
cell configuration parameter information pertaining to operation of a serving telecommunication cell; and
cell configuration parameter information pertaining to operation of at least one telecommunication cell neighbouring the serving telecommunication cell.

9. The mobile terminal (100, 420) of any one of claims 6 to 8 wherein the mobile terminal (100, 420) is configured to be supported by at least one of a 3GPP network, 3GPP2 network and a WiMAX network.

## Patentansprüche

1. Verfahren, das auf einem mobilen Endgerät (100, 420) durchgeführt wird, das über eine drahtlose Verbindung in Verbindung mit einem Netzwerk ist, wobei das Netzwerk eine oder mehrere Telekommunikationszellen (200, 210, 212, 214) umfasst, wobei die eine oder mehreren Telekommunikationszellen eine oder mehrere Makrozellen (200) und eine oder mehrere Femtozellen (210, 212, 214) aufweisen, wobei das Verfahren vorgesehen ist zum Bestimmen, ob die zumindest eine Telekommunikationszelle eine Femtozelle (210, 212, 214) ist, wobei die zumindest eine Telekommunikationszelle (200, 210, 212, 214) und/oder das mobile Endgerät (100, 420) nicht Release-8-3GPP-konform sind, wobei das Verfahren aufweist:
Empfangen (3-1) von Information, die durch das Netzwerk ausgesendet wird, mit Charakteristiken, die die eine oder mehreren Telekommunikationszellen (200, 210, 212, 214) in dem Netzwerk betreffen;
Bestimmen (3-2), ob zumindest eine der einen oder mehreren Telekommunikationszellen eine Femtozelle (210, 212, 214) ist, als eine Funktion der von dem Netzwerk ausgesendeten Information, wobei die Information eine Zellenkonfigurationsparameterinformation ist, die die eine oder mehreren Telekommunikationszellen in dem Netzwerk betrifft;
wobei das Bestimmen, ob zumindest eine der einen oder mehreren Telekommunikationszellen eine Femtozelle (210, 212, 214) ist, unter Verwendung der Zellenkonfigurationsparameterinformation durchgeführt wird, wobei die von dem Netzwerk ausgesendete Information keinen Identifizierer umfasst, der spezifisch die zumindest eine Telekommunikationszelle als einen bestimmten Zellentyp identifiziert;
wobei die Zellenkonfigurationsparameterinformation ein quantifizierbarer Wert ist, der definiert, wie eine Zelle für einen Betrieb konfiguriert ist, und zumindest einen aus Uplink-Sendeleistung-, Downlink-Sendeleistung- und Zellenauswahl/neuauswahl-Parametern aufweist.

2. Das Verfahren gemäß Anspruch 1, wobei das Bestimmen (3-2), ob zumindest eine der einen oder mehreren Telekommunikationszellen eine Femtozelle (210, 212, 214) ist, aufweist ein Unterscheiden einer Zelle, die einer Entität, die kein Dienstanbieter oder Netzwerkbetreiber ist, gehört oder von dieser betrieben wird oder beides, von einer Zelle, die einem Dienstanbieter oder einem Netzwerkbetreiber gehört oder von diesem betrieben wird oder beides.

3. Das Verfahren gemäß einem der Ansprüche 1 bis 2, wobei die Zellenkonfigurationsparameterinformation, die eine oder mehrere Telekommunikationszellen in dem Netzwerk betrifft, zumindest eines aufweist aus:
Zellenkonfigurationsparameterinformation hinsichtlich eines Betriebs einer bedienenden Telekommunikationszelle; und
Zellenkonfigurationsparameterinformation hinsichtlich eines Betriebs von zumindest einer Telekommunikationszelle, die benachbart zu der bedienenden Telekommunikationszelle ist.

4. Das Verfahren gemäß einem der Ansprüche 1 bis 3, wobei die Zellenkonfigurationsparameterinformation hinsichtlich einer oder mehrerer Telekommunikationszellen in dem Netzwerk zumindest eines aufweist aus: maximal zulässige Uplink-Sendeleistung (MaxAllowedULTxPower); primäregemeinsame-Pilotkanal-Sendeleistung (P-CPICHTxPower); erforderlicher Minimumqualitätspegel (QqualMin); Neuauswahl-Offset für ein gegebenes Paar von Zellen (Qoffset_{s,n}); und erforderlicher Minimumempfangspegel (Qrxlevmin).

5. Das Verfahren gemäß einem der Ansprüche 1 bis 4, wobei das Bestimmen (3-10), ob zumindest eine der einen oder mehreren Telekommunikationszellen eine Femtozelle (210, 212, 214) ist, weiter ein Entscheiden ermöglicht, ob eine bestimmte Telekommunikationszelle während eines Handoffs auszuwählen ist.

6. Ein mobiles Endgerät (100, 420), das für eine Verbindung mit einem Netzwerk über eine drahtlose Verbindung konfiguriert ist, wobei das Netzwerk eine oder mehrere Telekommunikationszellen (200, 210, 212, 214) aufweist, wobei die eine oder mehreren Telekommunikationszellen (200, 210, 212, 214) eine oder mehrere Makrozellen (200) und eine oder mehrere Femtozellen (210, 212, 214) aufweist, wobei zumindest eine Telekommunikationszelle und/oder das mobile Endgerät (100, 420) nicht Release-8-3GPP-konform sind, wobei das Verfahren aufweist:
zumindest eine drahtlose Zugangsfunkvorrichtung (423), die konfiguriert ist zum:
Empfangen von Information, die durch das Netzwerk ausgesendet wird, mit Charakteristiken, die eine oder mehrere Telekommunikationszellen (200, 210, 212, 214) in dem Netzwerk betreffen;
zumindest einen Prozessor (128, 421), der konfiguriert ist zum:
Bestimmen, ob zumindest eine der einen oder mehreren Telekommunikationszellen eine Femtozelle (210, 212, 214) ist, als eine Funktion der von dem Netzwerk ausgesendeten Information, wobei die Information eine Zellenkonfigurationsparameterinformation ist, die die eine oder mehreren Telekommunikationszellen in dem Netzwerk betrifft;
wobei das Bestimmen, ob zumindest eine der einen oder mehreren Telekommunikationszellen eine Femtozelle (210, 212, 214) ist, unter Verwendung der Zellenkonfigurationsparameterinformation durchgeführt wird, wobei die von dem Netzwerk ausgesendete Information keinen Identifizierer umfasst, der spezifisch die zumindest eine Telekommunikationszelle als einen bestimmten Zellentyp identifiziert;
wobei die Zellenkonfigurationsparameterinformation ein quantifizierbarer Wert ist, der definiert, wie eine Zelle für einen Betrieb konfiguriert ist, und zumindest einen aus Uplink-Sendeleistung-, Downlink-Sendeleistung- und Zellenauswahl/neuauswahl-Parametern aufweist.

7. Das mobile Endgerät (100, 420) gemäß Anspruch 6, wobei der zumindest eine Prozessor (128, 421), der konfiguriert ist zum Bestimmen, ob zumindest eine der einen oder mehreren Telekommunikationszellen eine Femtozelle (210, 212, 214) ist, konfiguriert ist zum Unterscheiden einer Zelle, die einer Entität, die kein Dienstanbieter oder Netzwerkbetreiber ist, gehört oder von dieser betrieben wird oder beides, von einer Zelle, die einem Dienstanbieter oder einem Netzwerkbetreiber gehört oder von diesem betrieben wird oder beides.

8. Die mobile Vorrichtung (100, 420) gemäß einem der Ansprüche 6 bis 7, wobei die Zellenkonfigurationsparameterinformation, die eine oder mehrere Telekommunikationszellen in dem Netzwerk betrifft, zumindest eines aufweist aus:
Zellenkonfigurationsparameterinformation hinsichtlich eines Betriebs einer bedienenden Telekommunikationszelle; und
Zellenkonfigurationsparameterinformation hinsichtlich eines Betriebs von zumindest einer Telekommunikationszelle, die benachbart zu der bedienenden Telekommunikationszelle ist.

9. Das mobile Endgerät (100, 420) gemäß einem der Ansprüche 6 bis 8, wobei das mobile Endgerät (100, 420) konfiguriert ist, durch zumindest eines aus einem 3GPP-Netzwerk, einem 3GPP2-Netzwerk und einem WiMAX-Netzwerk unterstützt zu werden.

## Revendications

1. Procédé exécuté sur un terminal mobile (100, 420) qui est connecté à un réseau par une connexion sans fil, le réseau comprenant une ou plusieurs cellules de télécommunications (200, 210, 212, 214), les une ou plusieurs cellules de télécommunications comprenant une ou plusieurs macrocellules (200) et une ou plusieurs femtocellules (210, 212, 214), le procédé étant destiné à déterminer si l'au moins une cellule de télécommunications est une femtocellule (210, 212, 214), l'au moins une cellule de télécommunications (200, 210, 212, 214) et/ou le terminal mobile (100, 420) n'étant pas conforme à la norme 3GPP Version 8, le procédé comprenant les étapes consistant à :
recevoir (3-1) des informations diffusées par le réseau et comprenant des caractéristiques intéressant les une ou plusieurs cellules de télécommunications (200, 210, 212, 214) du réseau ;
déterminer (3-2) si au moins une cellule parmi les une ou plusieurs cellules de télécommunications est une femtocellule (210, 212, 214) en fonction des informations diffusées par le réseau, les informations étant des informations de paramètres de configuration de la cellule qui intéressent les une ou plusieurs cellules de télécommunications du réseau ;
dans lequel l'étape consistant à déterminer si au moins une cellule parmi les une ou plusieurs cellules de télécommunications est une femtocellule (210, 212, 214) est exécutée à l'aide des informations de paramètres de configuration de la cellule, les informations diffusées par le réseau ne comprenant pas un identificateur qui identifie spécifiquement l'au moins une cellule de télécommunications comme un type de cellule particulier ;
dans lequel les informations de paramètres de configuration de la cellule sont une valeur quantifiable qui définit comment une cellule est configurée pour fonctionner et comprennent au moins l'un des éléments suivants : puissance d'émission montante, puissance d'émission descendante et paramètres de sélection/resélection des cellules.

2. Procédé selon la revendication 1, dans lequel l'étape consistant à déterminer si au moins une cellule parmi les une ou plusieurs cellules de télécommunications est une femtocellule (210, 212, 214) comprend l'étape consistant à distinguer une cellule qui est possédée ou exploitée, ou les deux, par une entité qui n'est pas un fournisseur de service ou un opérateur de réseau, par rapport à une cellule qui est possédée ou exploitée, ou les deux, par un fournisseur de service ou un opérateur de réseau.

3. Procédé selon l'une quelconque des revendications 1 et 2, dans lequel les informations de paramètres de configuration de la cellule intéressant les une ou plusieurs cellules de télécommunications du réseau comprennent au moins l'une des suivantes :
informations de paramètres de configuration de la cellule intéressant le fonctionnement d'une cellule de télécommunications de desserte ; et
informations de paramètres de configuration de la cellule intéressant le fonctionnement d'au moins une cellule de télécommunications adjacente à la cellule de télécommunications de desserte.

4. Procédé selon l'une quelconque des revendications 1 à 3, dans lequel les informations de paramètres de configuration de la cellule, intéressant une ou plusieurs cellules de télécommunications du réseau, comprennent au moins l'une des suivantes : puissance d'émission montante maximale autorisée (MaxAllowedULTxPower) ; puissance d'émission du canal pilote primaire commun (P-CPICHTxPower) ; niveau minimal de qualité exigé (QqualMin) ; décalage de resélection pour une paire considérée de cellules (Qoffset_{s,n}) ; et niveau minimal de réception exigé (Qrxlevmin).

5. Procédé selon l'une quelconque des revendications 1 à 4, dans lequel l'étape consistant à déterminer si au moins une cellule parmi les une ou plusieurs cellules de télécommunications est une femtocellule (210, 212, 214) valide en outre le fait de décider de sélectionner une cellule de télécommunications particulière pendant le transfert.

6. Terminal mobile (100, 420) configuré pour se connecter à un réseau par une connexion sans fil, le réseau comprenant une ou plusieurs cellules de télécommunications (200, 210, 212, 214), les une ou plusieurs cellules de télécommunications comprenant une ou plusieurs macrocellules (200) et une ou plusieurs femtocellules (210, 212, 214), au moins une cellule de télécommunications et/ou le terminal mobile (100, 420) n'étant pas conforme à la norme 3GPP Version 8, le procédé comprenant :
au moins un accès radio sans fil (423) configuré pour :
recevoir des informations diffusées par le réseau et comprenant des caractéristiques intéressant les une ou plusieurs cellules de télécommunications (200, 210, 212, 214) du réseau ;
déterminer si au moins une cellule parmi les une ou plusieurs cellules de télécommunications est une femtocellule (210, 212, 214) en fonction des informations diffusées par le réseau, les informations étant des informations de paramètres de configuration de la cellule qui intéressent les une ou plusieurs cellules de télécommunications du réseau ;
dans lequel l'étape consistant à déterminer si au moins une cellule parmi les une ou plusieurs cellules de télécommunications est une femtocellule (210, 212, 214) est exécutée à l'aide des informations de paramètres de configuration de la cellule, les informations diffusées par le réseau ne comprenant pas un identificateur qui identifie spécifiquement l'au moins une cellule de télécommunications comme un type de cellule particulier ;
dans lequel les informations de paramètres de configuration de la cellule sont une valeur quantifiable qui définit comment une cellule est configurée pour fonctionner et comprennent au moins l'un des éléments suivants : puissance d'émission montante, puissance d'émission descendante et paramètres de sélection/resélection des cellules.

7. Terminal mobile (100, 420) selon la revendication 6, dans lequel ledit au moins un processeur (128, 421) configuré pour déterminer si au moins une cellule parmi les une ou plusieurs cellules de télécommunications est une femtocellule (210, 212, 214) est configuré pour distinguer une cellule qui est possédée ou exploitée, ou les deux, par une entité qui n'est pas un fournisseur de service ou un opérateur de réseau, par rapport à une cellule qui est possédée ou exploitée, ou les deux, par un fournisseur de service ou un opérateur de réseau.

8. Terminal mobile (100, 420) selon l'une quelconque des revendications 6 et 7, dans lequel les informations de paramètres de configuration de la cellule intéressant les une ou plusieurs cellules de télécommunications du réseau comprennent au moins l'une des suivantes :
informations de paramètres de configuration de la cellule intéressant le fonctionnement d'une cellule de télécommunications de desserte ; et
informations de paramètres de configuration de la cellule intéressant le fonctionnement d'au moins une cellule de télécommunications adjacente à la cellule de télécommunications de desserte.

9. Terminal mobile (100, 420) selon l'une quelconque des revendications 6 à 8, le terminal mobile (100, 420) étant configuré pour être supporté par au moins l'un des réseaux suivants : réseau 3GPP, réseau 3GPP2 et réseau WiMAX.
